# EUROPEAN PATENT SPECIFICATION

(11) **EP 4 262 137 B1**
(45) Date of publication and mention of the grant of the patent: **08.04.2026**
(21) Application number: 22168237.0
(22) Date of filing: 13.04.2022
(51) Int. Cl.: H04L 9/08, H04L 9/32, H04L 67/12, H04W 4/02

(54) **MODULE, METHOD, AND SYSTEM FOR PRODUCING A DATA BLOCK**
MODUL, VERFAHREN UND SYSTEM ZUM PRODUZIEREN EINES DATENBLOCKS
MODULE, PROCÉDÉ ET SYSTÈME DE PRODUCTION D'UN BLOC DE DONNÉES

(43) Date of publication of application: 18.10.2023
(73) Proprietor: u-blox AG, 8800 Thalwil (CH)
(72) Inventor: Lenzarini, Davide, 8800 Thalwil (CH)
(74) Representative: Epping - Hermann - Fischer

(56) References cited:
- US-A1- 2020 007 331
- US-A1- 2020 184 706

## Description

### TECHNICAL FIELD

This disclosure relates to a module and a method for producing a data block. The disclosure further relates to a system comprising the module and a server, a computer program and a computer-readable storage medium.

### BACKGROUND ART

In an IoT system, physical objects (or groups of such objects) are embedded with sensors, processing ability, software, and other technologies to connect and exchange data with other devices and servers over the Internet or other communications networks. With increased popularity of such systems, also security issues are increasingly imminent. The security issues, however, are not limited to IoT systems. Hence, there is an ongoing demand to solve the problem of ensuring authenticity and integrity of data generated by communication devices.

US 2020/184706 A1 discloses an unmanned aerial vehicle (UAV) that couples to a sensor payload device that includes cameras, radar, lidar, and/or other sensors. The UAV, coupled to the sensor payload device, flies within the airspace of and/or around a property and captures images and/or sensor measurements of the property. The images and sensor measurements are certified so that they may be verified as unaltered by viewers. A 3D representation of the property is generated, and defects in the property are detected by comparing the 3D representation to media depicting property defects. A report identifying the defects is generated.

US 2020/007331 A1 discloses a method of authenticating sensor data including receiving, by at least a temporal attester, sensor data, calculating, by the at least a temporal attester, a current time, generating, by the at least a temporal attester, a secure timestamp generated as a function of the current time, and transmitting, by the at least a temporal attester and to at least a verifier, a temporally attested sensor signal including the secure timestamp.

### SUMMARY OF INVENTION

The above-mentioned problem is solved by the subject-matter of the attached independent claims. Further embodiments are disclosed in the attached dependent claims.

According to a first aspect of the disclosure, a module comprises at least one sensor, a processing unit, and a memory unit. The at least one sensor is configured to obtain sensor data. The processing unit is configured to obtain a hash value of a payload. The processing unit is further configured to generate a signature of the obtained hash value and the sensor data using a signature key stored in the memory unit. The processing unit is further configured to produce a data block comprising the obtained hash value, the sensor data, and the generated signature. The at least one sensor comprises a positioning sensor. The obtained sensor data comprises a positioning information regarding a position of the module where the processing unit obtained the hash value.

An advantage of the above module is that payloads, obtained or generated by a device comprising said module, may be made verifiable, i.e., it is verifiable that the payload existed at the device in combination with the sensor data obtained by the module and it is unchanged. So, the above module solves the problem of ensuring the authenticity and the integrity of a payload obtained or generated in field by coupling its hash value with the sensor data obtained by the module in order to certify that the payload was obtained or generated at a certain location.

The payload may be any payload of such device or of the module itself. In case the payload is a payload of the device, the hash value of the payload may be determined by the device and the module may receive, by a receiver, the hash value. In case the payload is a payload of the module itself, the module itself generates the hash value of its own payload. In both cases, the processing unit obtains the hash value of the payload.

It is further advantageous that, for verification of the existence of the payload at the device in combination with the sensor data obtained by the module, the payload itself does not have to be disclosed and, hence, can be kept secret, therewith allowing the protection of the payload data confidentiality and allowing the compliance with stricter data privacy rules.

Furthermore, by using sensor data obtained by the at least one sensor of the module itself, it can be assured that the sensor data is authentic, since it is not necessary to rely on external, and in general not trusted, sources of such sensor data.

Additionally, since the produced data block merely comprises a hash of the payload and not the payload itself, the data block may be conveniently stored, for example in public clouds or blockchains, without the risk of exposing the payload. In particular, separate storing of payloads and the data blocks is possible, which further increases security. Such data block may also be called a trust bundle.

By using the sensor data in the produced data block, an indexing of the data block in accordance with the sensor data is possible, such that improved search opportunities of a certain data block are achieved. Since the at least one sensor comprises a positioning sensor, indexing in accordance with positioning data may allow search for data blocks related to payloads that existed on a corresponding device or module at a certain location. For example, in case the at least one sensor further comprises a time sensor, indexing in accordance with time data may allow search for data blocks related to payloads that existed on a corresponding device or module at a certain time.

The positioning information may be any information determining a position or useful to determine a position (like raw measurements) of the module such as for example the information retrieved from GNSS constellations, 3GPP mobile communication networks, WiFi access points, Bluetooth beacons, etc. The positioning information may include accuracy and/or integrity related data.

A payload in this application may be any digital information, obtained and/or generated by a device comprising the module or obtained and/or generated by the module itself.

With the above, a module is presented, with which a zero knowledge proof scheme of ownership of a payload could be achieved, wherein the payload itself does not need to be disclosed. For instance, the verifier, having access to a produced data block, can provide to the prover the hash value and the sensor data contained in it. With this info, the prover, having access to the signature key, is able to generate exactly the same signature of the original produced data block and deliver it to the verifier for the verification, demonstrating this way the ownership without disclosing the payload content. Proof of integrity is also possible in that the owner of a corresponding device with such module can demonstrate that the payload existed in accordance with the obtained sensor data, and that the payload is unchanged.

According to at least one embodiment, the at least one sensor further comprises additionally at least one of the following:
- a time sensor, wherein the obtained sensor data further comprises a time information regarding a time at which the processing unit obtained the hash value, and
- an environmental sensor wherein the obtained sensor data further comprises an environmental information regarding an environmental parameter determined by the environmental sensor when the processing unit obtained the hash value.

The time information may be, for example, a timestamp. The time sensor may be, for example, an internal clock tracking for example a Coordinated Universal Time, UTC, in the module, or may be a sensor which obtains time information from a system time, such as, for example, from a mobile communication network based on 3GPP standards or from a GNSS constellation like GPS, BeiDou, GALILEO, GLONASS, etc. The time information may include accuracy and/or integrity related data and/or time metadata, in case the time sensor comprises a Temperature Compensated Crystal Oscillator, TCXO, comprising information regarding the crystal oscillator type and model, and/or the measured temperature when the time has been determined.

The environmental information may be any information relating to the environment in which the module operates. The environmental information may be, for example, a temperature, information obtained from a light sensor, a humidity, a pressure, a UV value, information relating to noise, rain, vibration, a VOC (Volatile Organic Compound) value, a geomagnetic or gravimetric value, etc.

In particular, also combination of the above mentioned sensors may be used in the module. Hence, the module may comprise, for example, a time sensor and a positioning sensor, or a positioning sensor and an environmental sensor, or any other combination of the above, also of more than two sensors.

An advantage of the specific sensors is that existence of the payload may be verified in each case in correlation with the specific obtained information. For example, it can be verified that the payload existed on a device at a certain time, a certain location, a certain temperature, etc. Additional security, integrity, and usability - for example due to the possibility to search for data blocks according to a time, a position, a temperature, etc. - is provided.

According to at least one advantageous embodiment, the positioning information comprises at least one of the following:
- 2-dimensional or 3-dimensional positioning coordinates,
   and
- raw data of a position of the module from which 2-dimensional or 3-dimensional positioning coordinates are derivable.

For example, in case the positioning information comprises raw data, from which positioning coordinates are derivable, the raw data may be GNSS raw measurement and/or an identification of e.g. a 3GPP mobile network cell, in which the module is located, and/or an identification of e.g. a WiFi access point or a Bluetooth beacon, whose signals are available where the module is located, and/or a direction of received signals from known sources and/or the strength and/or quality of the received signals. From the raw data, the position of the module may be derivable with a certain level of accuracy, quality and/or integrity. The 2-dimensional or 3-dimensional positioning coordinates may include accuracy and/or integrity related information.

According to at least one embodiment, the positioning information comprises information related to a source of the positioning information and/or a type of raw data of the positioning information from which a position of the module is obtained.

If the positioning sensor is not capable of determining the position of the module or it is not configured to do that in order to save energy on a battery-operated device, it may collect positioning raw measurements and enriches them with metadata like the source of the measurements, their type, the configuration parameters at which they are sampled and so on, to allow the module position determination by a server receiving those raw measurements.

According to at least one embodiment, the module further comprises a transmitter, wherein the transmitter is configured to transmit the produced data block.

An advantage thereof is that the data block may be transmitted to, for example, a server or a cloud service, where the data block may be stored and/or verified. In that the module itself comprises the transmitter, via which the data block is transmitted, a high security level is achieved as the module can control all the communication details.

According to at least one embodiment, the produced data block further comprises an identifier of the module.

In case the produced data block also comprises such identifier of the module, also the signature generated using the signature key stored in the memory unit is preferably determined based on the obtained hash value, the obtained sensor data and the identifier of the module.

An advantage thereof is that security is further improved in that it can be verified that a certain data block is from a certain module. Furthermore, searchability for data blocks from a certain module is provided. Moreover, the identifier of the module provides an efficient possibility to retrieve a verification key to be used to verify the data block signature.

The produced data block may further also comprise information such as a version of the data block format, a firmware and/or hardware version of the module, etc.

In all above embodiments, the module may be, for example, a positioning module, for example a Global Navigation Satellite System, GNSS, module and/or a communication module, for example a module according to a 3GPP standard or an IEEE standard, for example using LTE, 5G, 6G, or WiFi or Bluethooth.

According to a second aspect of the disclosure, a method for producing a data block comprises:
- obtaining, by a processing unit of a module, a hash value of a payload,
- obtaining, by at least one sensor of the module, sensor data,
- generating, by the processing unit of the module, a signature of the obtained hash value and the obtained sensor data using a signature key stored in a memory unit of the module, and
- producing, by the processing unit, a data block comprising the obtained hash value, the obtained sensor data, and the generated signature,
wherein the obtaining, by at least one sensor of the module, sensor data comprises obtaining, by a positioning sensor, sensor data comprising a positioning information regarding a position of the module where the processing unit of the module obtained the hash value.

Advantages and embodiments of the second aspect correspond, in general, to those of the first aspect and vice versa.

According to at least one embodiment, the method further comprises transmitting, by a transmitter of the module, the produced data block to a server, wherein the server certifies the coupling of the obtained hash value of the payload and the sensor data obtained by the at least one sensor by verifying the data block signature with a verification key corresponding to the signature key used by the module.

According to at least one embodiment, the signature key is provided to the module by a trusted entity and/or at a time of production of the module.

If the module comprises a Root of Trust (RoT), an advantage hereof is that the RoT can store securely and protect the usage of the signature key, according to which a high security and integrity of the produced data block is ensured.

According to at least one embodiment, a verification key corresponding to the signature key used by the module is provided to the server by a trusted entity and/or at a time of production of the module.

This way, the high security and integrity of the produced data block is ensured also on the server side, for the verification of the data block.

According to a third aspect, a system comprises a module according to the first aspect and a server. The module is configured to transmit the produced data block to the server. The server is configured to receive the data block from the module. The server is further configured to determine the coupling of the hash value of the payload obtained by the module and the sensor data obtained by the at least one sensor of the module by verifying the data block signature with a verification key corresponding to the signature key used by the module.

The determining of the coupling of the hash value of the payload and the sensor data in this context describes the determining of whether said hash value was indeed obtained in correspondence with the obtained sensor data, **i.e.,** that the hash value is coupled to the sensor data.

Herein, it is advantageous that the server may perform verification of the existence of the payload, and hence provide a trusted verification result.

Further advantages and embodiments of the third aspect correspond to the first and second aspect, and vice versa.

According to a fourth aspect, a computer program comprises instructions which, when executed by at least one processor, performs the method according to the second aspect.

According to a fifth aspect, a computer-readable storage medium comprises the computer program according to the fourth aspect.

Further advantages and embodiments of the fourth and fifth aspect correspond to the first, second and third aspect, and vice versa.

In all of the above aspects, a payload describes any data which may be generated or obtained and processed by a device, which, for example, comprises or is connected to the module according to the first aspect, or by the module itself. For example in case such device is an image generating device, the payload may be one or more images generated by the device. For example such device is an information forwarding device, the payload may be information data, obtained and forwarded by the device, etc.

### BRIEF DESCRIPTION OF DRAWINGS

In the drawings:
- Figure 1: shows a structural diagram of a module according to one embodiment of the disclosure,
- Figure 2: shows a structural diagram of an IoT device according to one embodiment of the disclosure,
- Figure 3: shows a structural diagram of a frame structure according to one embodiment of the disclosure, and
- Figure 4: shows a method for producing a data block according to one embodiment of the disclosure.

### DESCRIPTION OF EMBODIMENTS

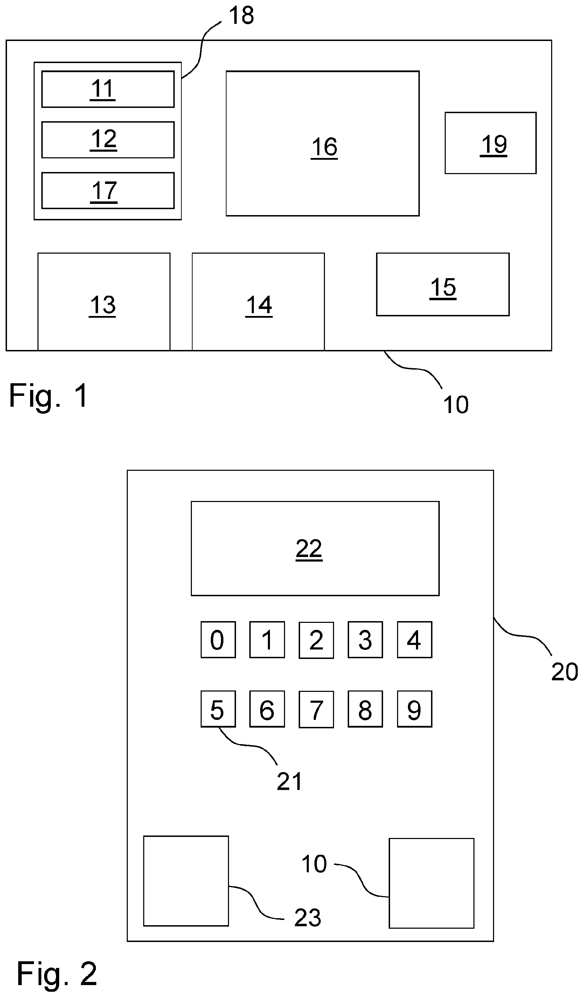

Figure 1 shows a structural diagram of a module 10 according to one embodiment of the disclosure. The module 10 comprises in this exemplary embodiment a time sensor 11 and a positioning sensor 12. The time sensor 11 is an internal clock tracking a Coordinated Universal Time, UTC, in the module 10. The positioning sensor 12 is a Global Navigation Satellite System, GNSS, sensor, which is configured to determine a 2 or 3-dimensional position of the module 10 from GNSS signaling. Instead of the embodiment shown herein with two sensors 11, 12 being a time sensor and a GNSS sensor, also only one such sensor, other sensors or combination of sensors may be used. For example, only one sensor may be used, which is able to obtain both time information and positioning information. Such sensor may be, for example, a GNSS sensor, which can be configured to obtain positioning information and time information from GNSS signaling.

The module 10 further comprises an environmental sensor 17, which is configured to obtain an environmental information such as, for example, a temperature, an illuminance, a humidity, a pressure, a UV value, information relating to noise, rain, vibration, a VOC (Volatile Organic Compound) value, a geomagnetic or gravimetric value, etc.

The positioning sensor 12, the time sensor 11, and the environmental sensor 17 are, in this exemplary embodiment, arranged in a sensor unit 18. Alternatively, the sensors 11, 12, 17 may be arranged as separate individual sensors, or as separate sensors in separate sensor units, or any combination thereof.

The module 10 further comprises a receiver 13 and a transmitter 14. The receiver 13 is configured to receive a hash value of a payload, which is to be made verifiable for integrity reasons, i.e. lodged to be verified that the corresponding payload existed at a certain time at a certain location. The hash value may be received, e.g. from a microcontroller unit (MCU) of a device in which the module is arranged. This is described in more detail with reference to Figure 2. Alternatively, however, the module 10 may also determine a hash value of a payload of its own instead of receiving a hash value of an external payload. Either way, a processing unit 16 of the module 10 obtains the hash value of the payload.

The module 10 further comprises a memory unit 15, in which a signature key is stored. The signature key may either be for symmetric cryptography to provide a message authentication code, like with Hash-based Message Authentication Code (HMAC), or for asymmetric cryptography to provide a digital signature, like with Elliptic Curve Digital Signature Algorithm (ECDSA). Additionally, in the memory unit 15, an identifier of the module 10 is stored. The signature key and the identifier of the module 10 can be provided to the module 10 for example in a secure environment during production of the module 10 and they can be protected by a Root of Trust 19 (RoT). The RoT 19, in fact, for example can allow the storage of the signature key in the memory unit 15 in encrypted form and allow its utilization for the signature of data provided as input without never disclosing it in plain text. In alternative, the memory unit 15 can be a subunit of the RoT 19, this way the access to any content stored in the memory unit 15 can be protected by the RoT 19. The module 10 therefore can be a secure module.

Furthermore, the module 10 comprises the processing unit 16, which may be, for example, a common processor, microcontroller, etc. The processing unit 16 is configured to generate a signature of the received hash value and the obtained sensor data using the signature key stored in the memory unit 15, and produce a data block comprising the received hash value, the obtained sensor data, and the generated signature.

The transmitter 14 is configured to transmit the data block, for example to a server. To do so, the module 10 may have a type of transmitter 14, which is directly capable of communicating with such server. This is the case, for example, if the module is a communication and positioning module, which provides communication and positioning capabilities. Alternatively, the module 10 may transmit the data block indirectly to the server, e.g. by providing the data block to an MCU of a device in which the module 10 is arranged, which then sends the data block to the server. This may be the case, for example, in case the module is a positioning module.

The module 10 described herein may be, for example, a positioning module or a combined positioning and communication module. The module may be implemented as an integrated circuit (IC) or may be implemented as a printed circuit board (PCB), on which a corresponding IC is mounted.

Figure 2 shows a structural diagram of an IoT device 20 according to one embodiment of this disclosure. The IoT device 20, in this example, is a payment device, for example for electronic payment.

In particular in IoT devices, payloads are continuously generated in a high volume. For security reasons, it may be advantageous to verify, however, whether a payload, which allegedly existed on a certain IoT device, really existed as claimed. The IoT device described herein allows an owner of the IoT device to prove, without disclosing the payload itself, that the payload existed on the IoT device and has not been tempered with.

The IoT device 20 comprises number keys 21 and a display 22, for example to display payment particulars and enter a payment PIN, etc.

The IoT device 20 is configured to process payment transactions, for example by obtaining particulars such as an amount of money which is to be paid, credit card information from which the money is to be deposited, PIN information authorizing the payment transaction, etc. The entire processing of one payment transaction, in this case, is a payload of the IoT device 20.

The IoT device 20 comprises a microcontroller unit (MCU) 23, which is also known as a host of IoT device 20. The MCU 23 is processing the payload of the IoT device 20. The MCU 23 is further configured to generate a hash value of the payload.

The IoT device 20 further comprises a module 10, which is configured to obtain sensor data, obtain a hash value of the payment payload from the MCU 23, generate a signature of the received hash value and the obtained sensor data using a signature key, and produce a data block comprising the received hash value, the obtained sensor data, and the signature.

For example, the sensor data comprises a time and positioning information of when and where the payment transaction was processed by the payment IoT device 20 and the sensor data further comprises a temperature information of an environment of where the payment transaction was processed by the IoT device 20 at the time it was processed. Then it is possible, in case verification of the payment transaction is needed, to verify, that the hash value corresponding to the performed transaction was received by the module 10 at that time and location and temperature lodged in the data block.

Assuming that the hash value of the payload is obtained by the module 10 immediately or shortly after (e.g., not more than a few seconds, in particular time used for processing) the payload is processed on the IoT device 20, it can be verified that the payload existed on the IoT device 20 at such corresponding time and position of the IoT device 20.

The module 10 of the IoT device 20 may be, for example, the module 10 described with reference to Figure 1.

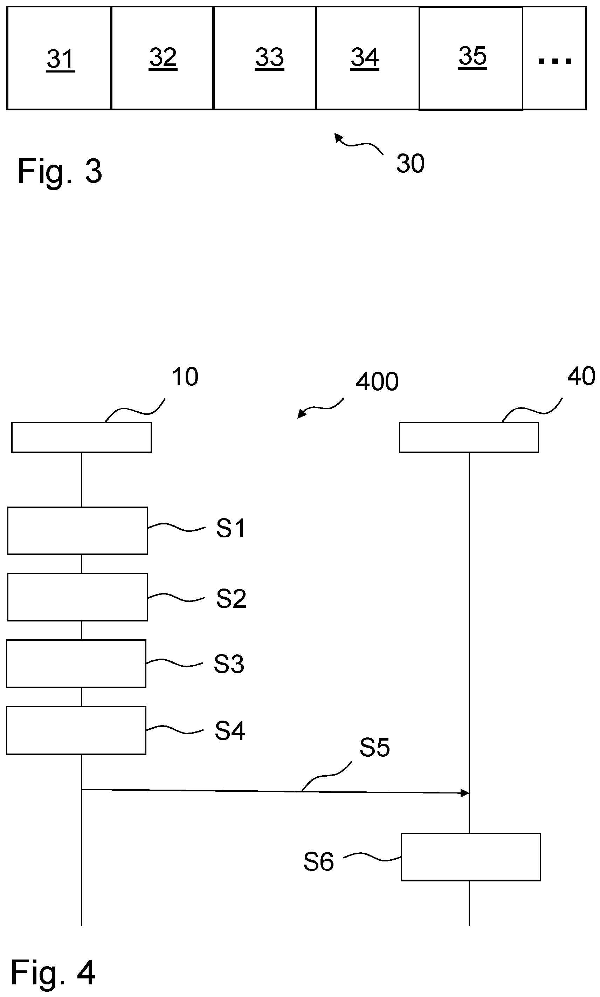

Figure 3 shows a structural diagram of a frame structure 30 of a data block according to one embodiment of the disclosure. The frame structure 30 comprises several fields 31, 32, 33, 34, 35 and may also comprise further fields with further information not further discussed herein.

The frame structure 30 may be, for example, a frame structure of the data block produced by the modules 10 discussed in Figures 1 and 2.

A first field 31, may comprise a fixed size hash value of a payload.

In a second field 32, a trusted UTC time at which the hash value was obtained by the module may be comprised. The UTC time is trusted in that it is obtained by a trusted entity, for example by the module itself. Additional information like the accuracy and/or integrity and/or time metadata may also be included.

In a third field 33, trusted 3-dimensional position data (latitude, longitude, and altitude) of a position where the device producing the data block was located when the hash value was obtained may be comprised. The position is trusted in that it is obtained by a trusted entity, **i.e.,** by the module itself. In alternative, trusted 2-dimensional position data (latitude, longitude) may be comprised. In yet another alternative, raw measurements data useful to determine a position may be comprised. Additional information like the accuracy and/or integrity and/or metadata about raw measurements (like source of information and type of raw data) may also be included.

In a fourth field 34, optionally, an identifier of a module, which produced the data block, whose frame structure is shown here, is comprised. In the fourth field 34 or in further fields not discussed in detail herein, also a version of the frame format may be comprised, a module firmware and/or hardware version may be comprised, and if required, additional parameters to help the processing depending on a frame format version may be included.

In a fifth field 35, a signature of the above fields 31, 32, 33, 34 is comprised. The signature is calculated using a signature key stored in a memory unit and/or protected by a RoT.

Further fields may be included in the frame structure of the data block, for example comprising further sensor data, or other information.

With said frame structure of a data block, verification, with a high level of security and integrity, that a payload corresponding to the hash value contained in said data block existed in combination with the sensor data obtained by the at least one sensor of the module, is made possible to everyone having access to the verification key corresponding to the signature key used by the module.

An advantage of said frame structure is that its size is independent by the size of the original payload and it can be constant. The constant size of the frame and the availability of the identifier of the module allow efficient interoperability for the frame structure with existing systems and efficient processing of the data block. In fact, the second, third, fourth and fifth fields can be of fixed size and the first field stores only a hash of the payload, so a fixed size payload digest. In case for instance cryptographic hash functions are used, like SHA-2 or SHA-3, the payload digest size is also quite small as it can be 224 or 256 or 384 or 512 bits.

Figure 4 shows a method 400 for producing a data block and processing said data block in a system according to one embodiment of the disclosure.

In a step S1, a module 10, for example a module 10 corresponding to the modules 10 described with reference to Figures 1 and 2, obtains, by a receiver of the module, a hash value of a payload. Alternatively, in the step S1, the module 10 may generate a hash value of a payload of the module 10 itself. The hash value corresponds to a payload which is to be provided with proof of integrity, **i.e.,** that it existed in unchanged form and has not been tempered with. The payload is a payload which is generated, processed, and/or received by a device, which comprises the module, or by the module itself. In either case, a processing unit of the module obtains the hash value of the payload.

In a step S2, the module obtains, by at least one sensor of the module 10, sensor data. In particular, the module obtains, by at least one positioning sensor, positioning information regarding a position of the module where the processing unit obtained the hash value of the payload.

In a step S3, the module generates, by a processing unit, a signature of the received hash value and the obtained sensor data using a signature key stored in a memory unit of the module and/or protected by a RoT of the module. The determining of the signature may be done, with the signature key, using symmetric cryptography to produce a message authentication code, like with HMAC, or using asymmetric cryptography to produce a digital signature, like with ECDSA.

In a step S4, the module produces, by the processing unit, a data block comprising at least the received hash value, the obtained sensor data, and the signature.

For producing the data block, for example, the hash value of the payload, wherein the hash value may have a fixed size, may be added to a first field of a frame structure of the data block. The sensor data obtained by the at least one sensor may be added to further respective field of a frame structure of the data block. For example, the sensor data obtained by different sensors may be added to respective such fields of the frame structure.

In case, for example, the at least one sensor comprises a time sensor and a positioning sensor, time information obtained by the time sensor may be added to one second field and positioning information obtained by the positioning sensor may be added to a third field. The hash value and the sensor data may be added to the respective fields in plain text form.

The signature, determined in step S3 may, for example, be added to a respective field of the frame structure of the data block.

In a step S5, the module transmits, either directly or via an MCU of a device in which the module is arranged, the produced data block to a server 40 and the server receives the data block. The server may be, for example, a server with a high level of security, for example located in a safe environment and administered by a trusted provider that has been provisioned with the verification keys corresponding to the signature keys used by the modules. Such trusted provider may be, for example, a provider of verification procedures of payloads on devices. The trusted provider may be, for example, a manufacturer of the modules described herein.

In a step S6, the server verifies the signature comprised in the data block with a verification key corresponding to the signature key used by the module. By verifying the signature, it can be determined that the payload, whose hash value is comprised in the data block and based on which, among others, the signature is determined, existed in unchanged form. In case the payload would have been tempered with after producing the data block, such modification could be detected due to a mismatch of the hash value thereof. Additionally, it can be determined that payload existed in correspondence with the sensor data. For example, in case the sensor data comprises time and positioning information, it can be determined that the hash of the payload was obtained by the module at a certain time while the module was located at a certain position.

### LIST OF REFERENCE SIGNS

- 10: module
- 11: time sensor
- 12: positioning sensor
- 13: receiver
- 14: transmitter
- 15: memory unit
- 16: processing unit
- 17: environmental sensor
- 18: sensor unit
- 19: Root of Trust
- 20: IoT device
- 21: number key
- 22: display
- 23: microcontroller unit
- 30: frame structure
- 31: first field
- 32: second field
- 33: third field
- 34: fourth field
- 35: fifth field
- 40: server

- 400: method
- S1 - S6: method steps

## Claims

1. A module (10) comprising at least one sensor (11, 12, 17), a processing unit (16), and a memory unit (15), wherein:
- the at least one sensor (11, 12, 17) is configured to obtain sensor data; and
- the processing unit (16) is configured to obtain a hash value of a payload; and
- the processing unit (16) is further configured to:
- generate a signature of the obtained hash value and the obtained sensor data using a signature key stored in the memory unit (15), and
- produce a data block comprising the obtained hash value, the obtained sensor data, and the generated signature;
wherein the at least one sensor (11, 12, 17) comprises a positioning sensor (12), and the obtained sensor data comprises a positioning information regarding a position of the module (10) where the processing unit (16) obtained the hash value.

2. The module (10) according to claim 1, wherein the at least one sensor (11, 12, 17) further comprises additionally at least one of the following:
- a time sensor (11), wherein the obtained sensor data further comprises a time information regarding a time at which the processing unit (16) obtained the hash value, and
- an environmental sensor (17), wherein the obtained sensor data further comprises an environmental information regarding an environmental parameter determined by the environmental sensor (17) when the processing unit (16) obtained the hash value.

3. The module (10) according to claim 2, wherein the time information obtained by the time sensor (11) comprises at least one of the following:
- a Coordinated Universal Time, UTC, tracked by the time sensor (11) in the module (10),
- a time information obtained by the time sensor (11) from a mobile communication network based on 3GPP standards,
- a time information obtained by the time sensor (11) from a global navigation satellite system, GNSS, constellation, and
- time metadata, in case the time sensor (11) comprises a Temperature Compensated Crystal Oscillator, TCXO, comprising information regarding a model of the TCXO.

4. The module (10) according to any of claims 1 to 3, wherein the positioning information comprises at least one of the following:
- 2-dimensional or 3-dimensional positioning coordinates,
and
- raw data of a position of the module (10) from which 2-dimensional or 3-dimensional positioning coordinates are derivable.

5. The module (10) according to any of claims 1 to 4, wherein the positioning information comprises information related to a source of the positioning information and/or a type of raw data of the positioning information from which a position of the module (10) is obtained.

6. The module (10) according to any of claims 1 to 5, further comprising a transmitter (14), wherein the transmitter (14) is configured to transmit the produced data block to a server (40).

7. The module (10) according to any of claims 1 to 6, wherein the produced data block further comprises an identifier of the module (10).

8. A method for producing a data block, the method comprising:
- obtaining (S1), by a processing unit of a module, a hash value of a payload,
- obtaining (S2), by at least one sensor of the module, sensor data,
- generating (S3), by the processing unit of the module, a signature of the obtained hash value and the obtained sensor data using a signature key stored in a memory unit of the module, and
- producing (S4), by the processing unit, a data block comprising the obtained hash value, the obtained sensor data, and the generated signature;
wherein the obtaining (S2), by at least one sensor of the module, sensor data comprises obtaining, by a positioning sensor, sensor data comprising a positioning information regarding a position of the module where the processing unit of the module obtained the hash value.

9. The method according to claim 8, further comprising:
- transmitting (S5), by a transmitter of the module, the produced data block to a server, wherein the server certifies (S6) the coupling of the obtained hash value of the payload and the sensor data obtained by the at least one sensor by verifying the data block signature with a verification key corresponding to the signature key used by the module.

10. The method according to claim 8, wherein the signature key is provided to the module by a trusted entity and/or at a time of production of the module.

11. The method according to claim 10, wherein a verification key corresponding to the signature key used by the module is provided to the server by a trusted entity and/or at a time of production of the module.

12. A system comprising a module (10) according to any of claims 1 to 7 and a server (40), wherein:
- the module (10) is configured to transmit the produced data block to the server (40);
- the server (40) is configured to receive the data block from the module (10); and
- the server (40) is further configured to determine the coupling of the hash value of the payload obtained by the module (10) and the sensor data obtained by the at least one sensor of the module by verifying the data block signature with a verification key corresponding to the signature key used by the module (10).

13. A computer program comprising instructions which, when executed by a at least one processor, performs the method according to any of claims 8 to 11.

14. A computer-readable storage medium comprising the computer program according to claim 13.

## Patentansprüche

1. Ein Modul (10), das mindestens einen Sensor (11, 12, 17), eine Verarbeitungseinheit (16) und eine Speichereinheit (15) umfasst, wobei:
- der mindestens eine Sensor (11, 12, 17) dazu eingerichtet ist, Sensordaten zu erhalten; und
- die Verarbeitungseinheit (16) dazu eingerichtet ist, einen Hash-Wert einer Nutzlast zu erhalten; und
- die Verarbeitungseinheit (16) ferner dazu eingerichtet ist:
- eine Signatur des erhaltenen Hash-Wertes und der erhaltenen Sensordaten unter Verwendung eines in der Speichereinheit (15) gespeicherten Signaturschlüssels zu erzeugen, und
- einen Datenblock zu erzeugen, der den erhaltenen Hash-Wert, die erhaltenen Sensordaten und die erzeugte Signatur umfasst;
wobei der mindestens eine Sensor (11, 12, 17) einen Positionssensor (12) umfasst, und die erhaltenen Sensordaten eine Positionsinformation bezüglich einer Position des Moduls (10) umfassen, an der die Verarbeitungseinheit (16) den Hash-Wert erhalten hat.

2. Das Modul (10) nach Anspruch 1, wobei der mindestens eine Sensor (11, 12, 17) zusätzlich mindestens eines der Folgenden umfasst:
- einen Zeitsensor (11), wobei die erhaltenen Sensordaten ferner eine Zeitinformation bezüglich eines Zeitpunkts umfassen, zu dem die Verarbeitungseinheit (16) den Hash-Wert erhalten hat, und
- einen Umgebungssensor (17), wobei die erhaltenen Sensordaten ferner eine Umgebungsinformation bezüglich eines Umgebungsparameters umfassen, der von dem Umgebungssensor (17) bestimmt wurde, als die Verarbeitungseinheit (16) den Hash-Wert erhalten hat.

3. Das Modul (10) nach Anspruch 2, wobei die vom Zeitsensor (11) erhaltene Zeitinformation mindestens eines der Folgenden umfasst:
- eine koordinierte Weltzeit, UTC, die vom Zeitsensor (11) im Modul (10) verfolgt wird,
- eine Zeitinformation, die der Zeitsensor (11) von einem auf 3GPP-Standards basierenden Mobilkommunikationsnetz erhält,
- eine Zeitinformation, die durch den Zeitsensor (11) von einer globalen Navigationssatellitensystem-, GNSS-, Konstellation erhalten wird, und
- Zeitmetadaten, falls der Zeitsensor (11) einen temperaturkompensierten Quarzoszillator, TCXO, umfasst, die Informationen über ein Modell des TCXO enthält.

4. Das Modul (10) nach einem der Ansprüche 1 bis 3, wobei die Positionsinformationen mindestens eines der Folgenden umfassen:
- 2-dimensionale oder 3-dimensionale Positionskoordinaten,
und
- Rohdaten einer Position des Moduls (10), aus denen 2-dimensionale oder 3-dimensionale Positionskoordinaten ableitbar sind.

5. Das Modul (10) nach einem der Ansprüche 1 bis 4, wobei die Positionsinformationen Informationen bezüglich einer Quelle der Positionsinformationen und/oder eines Typs von Rohdaten der Positionsinformationen, aus denen eine Position des Moduls (10) erhalten wird, umfassen.

6. Das Modul (10) nach einem der Ansprüche 1 bis 5, ferner umfassend einen Sender (14), wobei der Sender (14) dazu eingerichtet ist, den erzeugten Datenblock an einen Server (40) zu übertragen.

7. Das Modul (10) nach einem der Ansprüche 1 bis 6, wobei der erzeugte Datenblock ferner eine Kennung des Moduls (10) umfasst.

8. Verfahren zum Erzeugen eines Datenblocks, wobei das Verfahren umfasst:
- Ermitteln (S1) eines Hash-Wertes einer Nutzlast durch eine Verarbeitungseinheit eines Moduls,
- Erfassen (S2) von Sensordaten durch mindestens einen Sensor des Moduls,
- Erzeugen (S3), durch die Verarbeitungseinheit des Moduls, einer Signatur des erhaltenen Hash-Wertes und der erhaltenen Sensordaten unter Verwendung eines in einer Speichereinheit des Moduls gespeicherten Signaturschlüssels, und
- Erzeugen (S4), durch die Verarbeitungseinheit, eines Datenblocks, der den erhaltenen Hash-Wert, die erhaltenen Sensordaten und die erzeugte Signatur umfasst;
wobei das Erhalten (S2) von Sensordaten durch mindestens einen Sensor des Moduls das Erhalten von Sensordaten durch einen Positionssensor umfasst, die eine Positionsinformation bezüglich einer Position des Moduls umfassen, an der die Verarbeitungseinheit des Moduls den Hash-Wert erhalten hat.

9. Das Verfahren nach Anspruch 8, ferner umfassend:
- Übertragen (S5) des erzeugten Datenblocks durch einen Transmitter des Moduls an einen Server, wobei der Server die Kopplung des erhaltenen Hashwerts der Nutzlast und der durch den mindestens einen Sensor erhaltenen Sensordaten durch Verifizierung der Datenblocksignatur mit einem Verifizierungsschlüssel, der dem vom Modul verwendeten Signaturschlüssel entspricht, bestätigt (S6).

10. Das Verfahren nach Anspruch 8, wobei der Signaturschlüssel dem Modul von einer vertrauenswürdigen Entität und/oder zum Zeitpunkt der Herstellung des Moduls zur Verfügung gestellt wird.

11. Das Verfahren nach Anspruch 10, wobei ein Verifikationsschlüssel, der dem vom Modul verwendeten Signaturschlüssel entspricht, dem Server von einer vertrauenswürdigen Entität und/oder zum Zeitpunkt der Herstellung des Moduls zur Verfügung gestellt wird.

12. System umfassend ein Modul (10) nach einem der Ansprüche 1 bis 7 und einen Server (40), wobei:
- das Modul (10) dazu eingerichtet ist, den erzeugten Datenblock an den Server (40) zu übermitteln;
- der Server (40) dazu eingerichtet ist, den Datenblock von dem Modul (10) zu empfangen; und
- der Server (40) ferner dazu eingerichtet ist, die Kopplung des Hashwerts der von dem Modul (10) erhaltenen Nutzlast und der von dem mindestens einen Sensor des Moduls erhaltenen Sensordaten zu bestimmen, indem er die Datenblocksignatur mit einem Verifikationsschlüssel verifiziert, der dem von dem Modul (10) verwendeten Signaturschlüssel entspricht.

13. Computerprogramm mit Anweisungen, die bei Ausführung durch mindestens einen Prozessor das Verfahren nach einem der Ansprüche 8 bis 11 durchführen.

14. Computerlesbares Speichermedium, das das Computerprogramm nach Anspruch 13 enthält.

## Revendications

1. Module (10) comprenant au moins un capteur (11, 12, 17), une unité de traitement (16) et une unité de mémoire (15), dans lequel :
- l'au moins un capteur (11, 12, 17) est configuré pour obtenir des données de capteur ; et
- l'unité de traitement (16) est configurée pour obtenir une valeur de hachage des données utiles ; et
- l'unité de traitement (16) est en outre configurée pour :
- générer une signature de la valeur de hachage obtenue et des données de capteur obtenues à l'aide d'une clé de signature stockée dans l'unité de mémoire (15), et
- produire un bloc de données comprenant la valeur de hachage obtenue, les données de capteur obtenues et la signature générée ;
dans lequel l'au moins un capteur (11, 12, 17) comprend un capteur de positionnement (12), et les données de capteur obtenues comprennent une information de positionnement concernant une position du module (10) où l'unité de traitement (16) a obtenu la valeur de hachage.

2. Le module (10) selon la revendication 1, dans lequel le au moins un capteur (11, 12, 17) comprend en outre au moins l'un des suivants :
- un capteur de temps (11), dans lequel les données de capteur obtenues comprennent en outre une information temporelle concernant l'heure à laquelle l'unité de traitement (16) a obtenu la valeur de hachage, et
- un capteur environnemental (17), dans lequel les données de capteur obtenues comprennent en outre une information environnementale concernant un paramètre environnemental déterminé par le capteur environnemental (17) lorsque l'unité de traitement (16) a obtenu la valeur de hachage.

3. Le module (10) selon la revendication 2, dans lequel les informations temporelles obtenues par le capteur de temps (11) comprennent au moins l'un des suivants :
- un temps universel coordonné (UTC) suivi par le capteur de temps (11) dans le module (10),
- une information temporelle obtenue par le capteur de temps (11) à partir d'un réseau de communication mobile basé sur les normes 3GPP,
- une information temporelle obtenue par le capteur de temps (11) à partir d'une constellation du système mondial de navigation par satellite, GNSS, et
- des métadonnées temporelles, dans le cas où le capteur de temps (11) comprend un oscillateur à cristal à température compensée, TCXO, comprenant des informations relatives à un modèle du TCXO.

4. Le module (10) selon l'une des revendications 1 à 3, dans lequel les informations de positionnement comprennent au moins l'un des suivants :
- des coordonnées de positionnement bidimensionnelles ou tridimensionnelles, et
- données brutes d'une position du module (10) à partir desquelles des coordonnées de positionnement bidimensionnelles ou tridimensionnelles peuvent être dérivées.

5. Le module (10) selon l'une des revendications 1 à 4, dans lequel les informations de positionnement comprennent des informations relatives à une source d'informations de positionnement et/ou un type de données brutes des informations de positionnement à partir desquelles une position du module (10) est obtenue.

6. Le module (10) selon l'une des revendications 1 à 5, comprenant en outre un émetteur (14), dans lequel l'émetteur (14) est configuré pour transmettre le bloc de données produit à un serveur (40).

7. Le module (10) selon l'une des revendications 1 à 6, dans lequel le bloc de données produit comprend en outre un identifiant du module (10).

8. Procédé de production d'un bloc de données, comprenant :
- obtenir (S1), par une unité de traitement d'un module, d'une valeur de hachage des données utiles,
- obtenir (S2), par au moins un capteur du module, de données de capteur,
- générer (S3), par l'unité de traitement du module, d'une signature de la valeur de hachage obtenue et des données de capteur obtenues à l'aide d'une clé de signature stockée dans une unité de mémoire du module, et
- produire (S4), par l'unité de traitement, un bloc de données comprenant la valeur de hachage obtenue, les données de capteur obtenues et la signature générée ;
dans lequel l'obtenir (S2), par au moins un capteur du module, de données de capteur comprend l'obtenir, par un capteur de positionnement, de données de capteur comprenant une information de positionnement concernant une position du module où l'unité de traitement du module a obtenu la valeur de hachage.

9. Le procédé selon la revendication 8, comprenant en outre :
- transmettre (S5), par un émetteur du module, du bloc de données produit à un serveur, dans lequel le serveur certifie (S6) le couplage de la valeur de hachage obtenue des données utiles et des données du capteur obtenues par l'au moins un capteur en vérifiant la signature du bloc de données avec une clé de vérification correspondant à la clé de signature utilisée par le module.

10. Le procédé selon la revendication 8, dans lequel la clé de signature est fournie au module par une entité de confiance et/ou au moment de la production du module.

11. Le procédé selon la revendication 10, dans laquelle une clé de vérification correspondant à la clé de signature utilisée par le module est fournie au serveur par une entité de confiance et/ou au moment de la production du module.

12. Système comprenant un module (10) selon l'une des revendications 1 à 7 et un serveur (40), dans lequel :
- le module (10) est configuré pour transmettre le bloc de données produit au serveur (40) ;
- le serveur (40) est configuré pour recevoir le bloc de données du module (10) ; et
- le serveur (40) est en outre configuré pour déterminer le couplage de la valeur de hachage des données utiles obtenue par le module (10) et des données du capteur obtenues par au moins un capteur du module en vérifiant la signature du bloc de données avec une clé de vérification correspondant à la clé de signature utilisée par le module (10).

13. Programme d'ordinateur comprenant des instructions qui, lorsqu'elles sont exécutées par au moins un processeur, mettent en œuvre le procédé selon l'une quelconque des revendications 8 à 11.

14. Support de stockage lisible par ordinateur comprenant le programme d'ordinateur selon la revendication 13.
